# EUROPEAN PATENT APPLICATION

(11) **EP 4 198 725 A1**
(43) Date of publication of application: **21.06.2023**
(21) Application number: 22213018.9
(22) Date of filing: 13.12.2022
(51) Int. Cl.: G06F 9/48, G06F 9/52

(54) **APPARATUS, DEVICE, METHOD AND COMPUTER PROGRAM FOR PROCESSING A SEQUENCE OF UNITS OF DATA**

(30) Priority: 14.12.2021 US 202117644117
(71) Applicant: INTEL Corporation, Santa Clara, CA 95054 (US)
(72) Inventor: MCDONNELL, Niall, Limerick, LK V94 TK5W (IE); RICHARDSON, Bruce, Shannon, V14P898 (IE); SHAH, Rahul, Chandler, 85226 (US); PATHAK, Pravin, Bridgewater, 08807 (US); SHETTY, Rashmi, Austin, 78732 (US)
(74) Representative: 2SPL Patentanwälte PartG mbB

(57) **Abstract**

Examples relate to an apparatus, device, method, and computer program for processing a sequence of units of data, and of a computer program comprising such an apparatus or device. The apparatus comprises processing circuitry configured to obtain the sequence of units of data, obtain tokens indicating a readiness of a plurality of worker threads being executed on the processing circuitry, and process sub-sequences of the sequence of units of data by selecting, by a queue management circuitry of the processing circuitry, a worker thread from the plurality of worker threads based on the obtained tokens indicating the readiness, providing, by the queue management circuitry, a lock to a queue associated with the worker thread, the lock being associated with a resource comprising a sub-sequence of the sequence of units of data, obtaining, by the queue management circuitry, the lock from the worker thread after the worker thread has at least partially processed the sub-sequence of units of data stored in the resource, and proceeding with the next sub-sequence after the lock has been obtained.

## Description

### Background

Some processors include queue management circuitry, such as the Intel^{®} Dynamic Load Balancer, which may be used for load balancing purposes, e.g., for assigning incoming messages to worker cores.

### Brief description of the Figures

Some examples of apparatuses and/or methods will be described in the following by way of example only, and with reference to the accompanying figures, in which
- Fig. 1a: shows a block diagram of an example of an apparatus or device for processing a sequence of units of data, and of a computer system comprising such an apparatus or device;
- Figs. 1b and 1c: show examples of a method for processing a sequence of units of data;
- Fig. 2: shows a schematic diagram of a flow of the packets through a queue manager;
- Fig. 3: shows a schematic diagram of a use of the Dynamic Load Balancer as queue manager;
- Figs. 4a to 4d: show schematic diagrams of a sequence of states of a queue manager being used as lock manager;
- Fig. 5: shows a schematic diagram of an example of the use of a queue manager for processing packets of a network interface controller;
- Figs. 6a and 6b: show benchmark results of a benchmark with one security association;
- Figs. 7a and 7b: show benchmark results of a benchmark with four security associations; and
- Figs. 8a and 8b: show benchmark results of a benchmark with eight security associations.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e., only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

In the following description, specific details are set forth, but examples of the technologies described herein may be practiced without these specific details. Well-known circuits, structures, and techniques have not been shown in detail to avoid obscuring an understanding of this description. "An example/example," "various examples/examples," "some examples/examples," and the like may include features, structures, or characteristics, but not every example necessarily includes the particular features, structures, or characteristics.

Some examples may have some, all, or none of the features described for other examples. "First," "second," "third," and the like describe a common element and indicate different instances of like elements being referred to. Such adjectives do not imply element item so described must be in a given sequence, either temporally or spatially, in ranking, or any other manner. "Connected" may indicate elements are in direct physical or electrical contact with each other and "coupled" may indicate elements co-operate or interact with each other, but they may or may not be in direct physical or electrical contact.

As used herein, the terms "operating", "executing", or "running" as they pertain to software or firmware in relation to a system, device, platform, or resource are used interchangeably and can refer to software or firmware stored in one or more computer-readable storage media accessible by the system, device, platform, or resource, even though the instructions contained in the software or firmware are not actively being executed by the system, device, platform, or resource.

The description may use the phrases "in an example/example," "in examples/examples," "in some examples/examples," and/or "in various examples/examples," each of which may refer to one or more of the same or different examples. Furthermore, the terms "comprising," "including," "having," and the like, as used with respect to examples of the present disclosure, are synonymous.

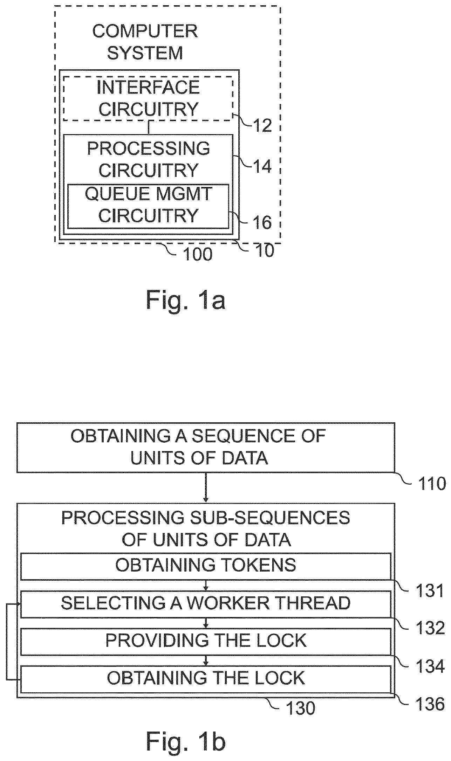

Fig. 1a shows a block diagram of an example of an apparatus 10 or device 10 for processing a sequence of units of data, and of a computer system 100 comprising such an apparatus 10 or device 10. The apparatus 10 comprises circuitry that is configured to provide the functionality of the apparatus 10. For example, the apparatus 10 of Fig. 1a comprises (optional) interface circuitry 12 and processing circuitry 14. The processing circuitry 14, in turn, comprises queue management circuitry 16. For example, the processing circuitry 14 may be coupled with the interface circuitry 12. For example, the processing circuitry 14 may be configured to provide the functionality of the apparatus, in conjunction with the interface circuitry 12 (for exchanging information, e.g., with a computer network or other components of the computer system). Likewise, the device 10 may comprise means that is/are configured to provide the functionality of the device 10. The components of the device 10 are defined as component means, which may correspond to, or implemented by, the respective structural components of the apparatus 10. For example, the device 10 of Fig. 1a comprises means for processing 14, which may correspond to or be implemented by the processing circuitry 14, a hardware queue manager 16, which is included in the means for processing 14, and which may be implemented by the queue management circuitry 16, and (optional) means for communicating 12, which may correspond to or be implemented by the interface circuitry 12.

The processing circuitry 14 or means for processing 14 is configured to obtain the sequence of units of data. The processing circuitry 14 or means for processing 14 is configured to obtain tokens indicating a readiness of a plurality of worker threads being executed on the processing circuitry. The processing circuitry 14 or means for processing 14 is configured to process sub-sequences of the sequence of units of data by, selecting, by the queue management circuitry 16 or hardware queue manager 16 of the processing circuitry 14 or means for processing 14, a worker thread from the plurality of worker threads based on the obtained tokens indicating the readiness. The processing of the sub-sequences of the sequence of units of data comprises providing, by the queue management circuitry or hardware queue manager, a lock to a queue associated with the worker thread, the lock being associated with a resource comprising a sub-sequence of the sequence of units of data. The processing of the sub-sequences of the sequence of units of data comprises obtaining, by the queue management circuitry or hardware queue manager, the lock from the worker thread after the worker thread has at least partially processed the sub-sequence of units of data stored in the resource. The processing of the sub-sequences of the sequence of units of data comprises proceeding with the next sub-sequence after the lock has been obtained.

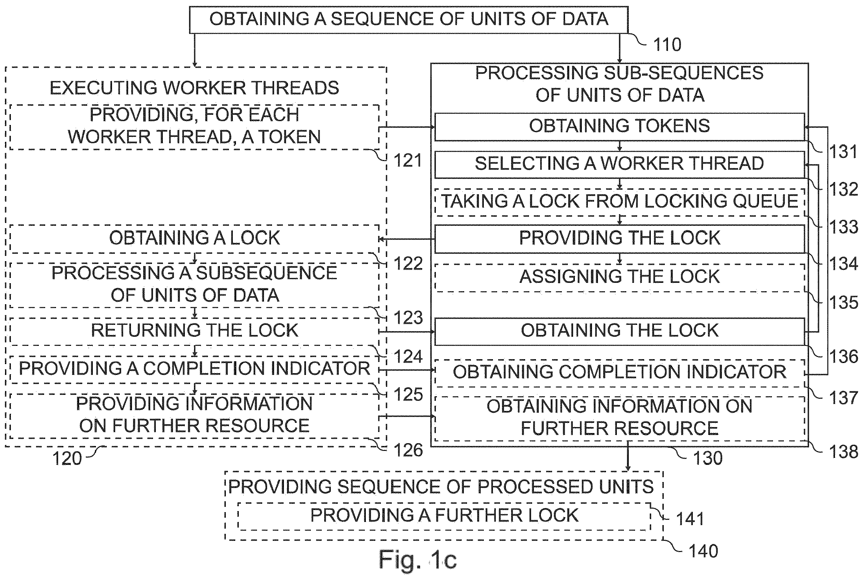

Figs. 1b and 1c show examples of a corresponding method for processing a sequence of units of data. For example, the method may be a computer-implemented method. The method may be performed by the apparatus 10 or device 10 of Fig. 1a. The method comprises obtaining 110 the sequence of units of data. The method comprises obtaining 131 tokens indicating a readiness of a plurality of worker threads being executed on the processing circuitry. The method comprises processing 130 sub-sequences of the sequence of units of data by selecting 132, by a queue management circuitry, a worker thread from the plurality of worker threads based on the obtained tokens indicating the readiness. The processing 130 of the sub-sequences of the sequence of units of data comprises providing 134, by the queue management circuitry, a lock to a queue associated with the worker thread, the lock being associated with a resource comprising a sub-sequence of the sequence of units of data. The processing 130 of the sub-sequences of the sequence of units of data comprises obtaining 136, by the queue management circuitry, the lock from the worker thread after the worker thread has at least partially processed the sub-sequence of units of data stored in the resource. The processing 130 of the sub-sequences of the sequence of units of data comprises proceeding with the next sub-sequence after the lock has been obtained.

In the following, the features of the apparatus 10, the device 10, the method and of a corresponding computer program are introduced in connection with the apparatus 10 of Fig. 1a. Features introduced in connection with the apparatus 10 may likewise be included in the corresponding device 10, method or computer program.

The present disclosure relates to a concept for processing sequences of units of data with the help of queue management circuitry. While queue management circuitry, such as the Intel^{®} dynamic load balancer, is generally used for the purpose of processing sequences of data, the proposed concept does not directly use the queue management circuitry for processing one unit of data after another by assigning the unit of data to a worker thread. Rather, a lock mechanism is being controlled by the queue management circuitry, which introduces a degree of concurrency in the processing, as the queue management circuitry is not necessarily invoked for each unit of data, but rather for sub-sequences of the sequences of units of data, which may reduce the work being performed by the queue management circuitry.

The proposed concept starts by obtaining the sequence of units of data. In the following, the proposed concept is introduced with respect to the processing of network packets. Accordingly, the sequence of units of data may be a sequence of data packets received by a network interface controller (NIC) circuitry, which may be implemented by the interface circuitry 12. For example, the sequence of units of data may be a sequence of packets, sensor data, work units etc. that is to be processed by the computer system. The sequence of units of data is a sequence, such that it comprises a plurality of units of data that are arranged in an order defined by the sequence. In other words, the units of data may be ordered according to the sequence. The sequence of units of data may be obtained via an (ordered) queue, which may be implemented by a ring buffer. Accordingly, the sequence of units of data may be obtained via a buffer circuitry implementing an ordered queue. A receive (RX) component of the NIC circuitry may be configured to put the units of data (e.g., the packets) into the ordered queue.

The proposed concept is based on two separate entities - the queue management circuitry and the plurality of worker threads, with the queue management circuitry being used to distribute the work, i.e., the sub-sequences of units of data, to the worker threads, which are configured to process the sub-sequences of units of data. In the following, both components are described, to outline the interaction between the two components. In some examples, the worker threads may even be executed by the processing circuitry of the apparatus 10. In other words, the processing circuitry may be configured to execute the plurality of worker threads and/or one or more further worker threads. Alternatively, the plurality of worker threads may be executed by other processing circuitry (being separate from the processing circuitry of the apparatus 10) of the computer system. In conclusion, the method may comprise executing 120 the plurality of worker threads and/or one or more further worker threads. The plurality of worker threads may be instances of a computer program being executed on the processing circuitry. The computer program may be configured to process the respective sub-sequence of units of data, e.g., by encrypting or decrypting the units of data (network packets, e.g., in a virtual private network scenario), by processing sensor data contained in the units of data etc.

The proposed concept is based on (at least) two indicators that are handled by the queue management circuitry - the "tokens" and the "locks". In addition, in some examples, "completion indicators" may be used as well. In effect, the "tokens" the "locks" and the "completion indicators" are pieces of information, e.g., single bits or bit vectors, that are stored in a memory. For example, if a token is provided from a worker thread to the queue management circuitry, in effect, the worker thread may store a piece of information in a memory (e.g., a queue) managed by the queue management circuitry. Accordingly, if a "lock" is provided to a worker thread, the queue management circuitry may store a piece of information (which may comprise a pointer to the resource) in memory (e.g., a queue) that is accessed by the worker thread. The lock may be taken from a locking queue of the queue management circuitry, which means that the lock (i.e., the piece of information representing the lock) is removed from the locking queue and stored in the queue associated with the worker thread. When the "lock" is returned, the piece of information representing the lock may be deleted from the queue associated with the worker thread and inserted in the locking queue. A completion indicator may be provided from a worker thread to the queue management circuitry by writing a piece information into a memory (e.g., a queue) managed by the queue management circuitry. The respective queues may be data structures stored in memory that are managed by the queue management circuitry. They may support enqueuing and/or dequeuing of entries (i.e., pieces of information), such as the tokens or locks.

The "tokens" indicate a readiness of the plurality of worker threads, i.e., whether the respective worker thread is ready to obtain a sub-sequence of units of data for processing. If a worker thread is ready to process a sub-sequence of units of data, i.e., as it is finished or almost finished with processing a previous sub-sequence of units of data, it provides its token to the queue management circuitry, e.g., by enqueuing the token in a token queue (that is handled/comprise by the queue management circuitry) associated with the worker thread. Initially, (all of) the worker threads may be ready for processing (as they are not currently occupied with processing). Therefore, initially, (all of) the worker threads may supply their token to the queue management circuitry. In other words, each worker thread may be configured to initially provide a token indicating the readiness of the worker thread to the queue management circuitry. Accordingly, as further shown in Fig. 1c, the method may comprise initially providing 121, for each worker thread, a token indicating the readiness of the worker thread to the queue management circuitry.

In the proposed concept, subsequences of units of data are processed by the worker threads. As the name indicates, these sub-sequences of units of data are portions of the sequence of units of data. Moreover, the sub-sequences are sequences as well, i.e., each sub-sequence comprises more than one unit of data. In other words, each sub-sequence of units of data comprises at least two units of data. For example, the sub-sequences are processed according to their position in the sequence of units of data. For example, each worker thread may process a pre-determined number of units of data (forming a sub-sequence of units of data) of the sequence of units of data. Alternatively, the sub-sequences of units of data may have different numbers of units of data. For example, the lock may be associated with the resource only. It may be for the worker thread to determine the quantity (the size of the sub-sequence) it can take on. If a ring buffer is used to store the sequence of units of data, a pointer to the head of the sub-sequence of units of data may be provided to the respective worker thread, so the worker thread knows where the sub-sequence of units of data starts.

The processing of the sub-sequences of the sequence of units of data is an iterative process - a worker thread is selected; it is assigned the sub-sequence of data with a lock that grants exclusive access to the resource comprising the sub-sequence of data. The worker thread obtains the sub-sequence of units of data and returns the lock after it no longer requires access to the resource. Then, the next sub-sequence of units of data can be processed, by providing the next worker thread with the lock. In some examples, this process is extended by using multiple separate resources in which the sub-sequences of units of data are stored, such that multiple locks can be assigned to multiple worker threads in parallel.

The processing of each sub-sequence of units of data starts with selecting one of the worker threads. The selection is based on the tokens indicating the readiness of the worker threads, i.e., by picking a worker thread that is known, via the presence of the token at the queue management circuitry, to be ready to process of a sub-sequence of units of data. For example, the selection may be based on a round-robin scheme (among the worker threads ready for processing), based on a random selection (among the worker threads ready for processing), or based on an order in which the tokens have been obtained from the worker threads.

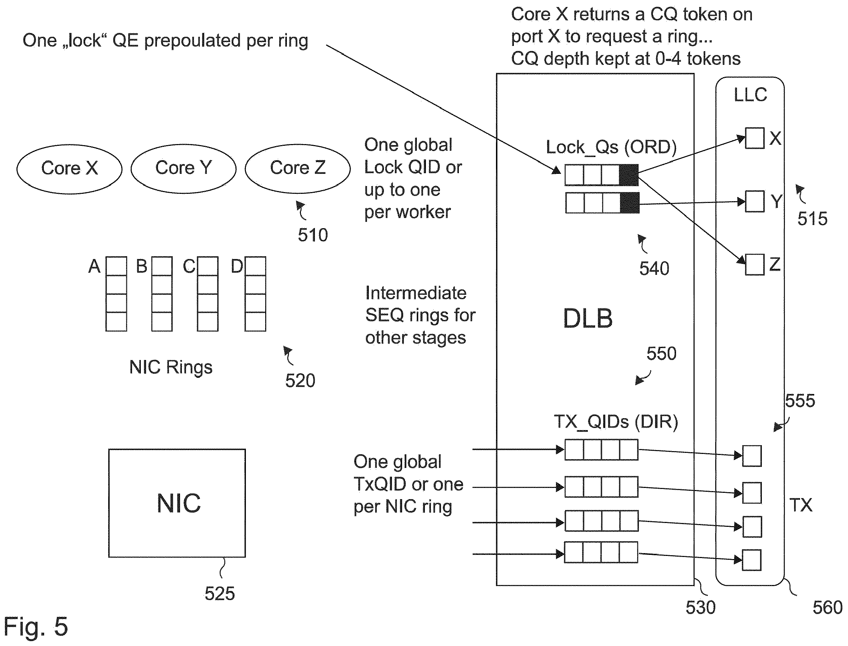

Once a worker thread is selected, the selected worker thread is supplied with the lock to the resource, guaranteeing the worker thread sole access to the resource. Accordingly, the lock acts as a lock with respect to (read) access to the resource, i.e., only the worked thread having the lock may be allowed to access the resource. For example, as outlined above, the worker thread may be provided with a lock giving the worker thread exclusive access to a portion of the resource comprising the sub-sequence of units of data (if multiple resources are used to store the sequence of data, e.g., as shown in Fig. 5, where multiple NIC rings 520 are used to store the incoming data packets). The queue management circuitry may be configured to assign a lock for accessing the resource to the worker thread by providing the lock to the queue associated with the worker thread. Accordingly, as further shown in Fig. 1c, the method may comprise assigning 135 a lock for accessing the resource to the worker thread by providing 134 the lock to the queue associated with the worker thread.

In the present disclosure, the sub-sequence of units is stored in a resource, which may be a hardware resource that is suitable for storing data. For example, the resource may be a memory resource or storage resource. For example, the resource may be a queue in which the (sub-sequence of the) sequence of units of data is stored. For example, as outlined above, the resource (e.g., each resource) may be a ring buffer.

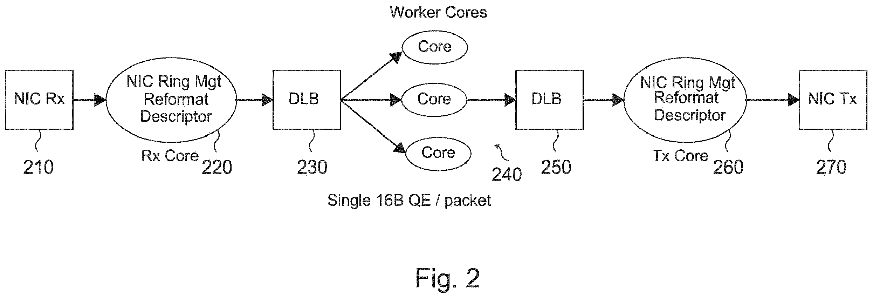

The lock is provided to, i.e., enqueued in, a queue associated with the selected worker thread. In Figs. 2 to 8b, this queue is denoted the "consumer queue". The use of queues is according to the modus operand! of the queue management circuitry, which is a mechanism for assigning queue entries to queues of worker threads. In many cases, each working thread may be suitable for, e.g., capable of, processing one sub-sequence at a time. Accordingly, a depth of the queue associated with a worker thread or further worker thread may be limited to one, so that a worker thread is limited to holding a single lock (and thus also limited to processing a single sub-sequence at a time).

In some implementations, each resource may be accessed via a separate lock. For example, the queue management circuitry may comprise one locking queue per resource being used to store the units of data. The queue management circuitry may be configured to take the lock from the locking queue associated with the resource comprising the sub-sequence of units of data. Accordingly, as further shown in Fig. 1c, the method may comprise, by the queue management circuitry, taking 133 the lock from the locking queue associated with the resource comprising the sub-sequence of units of data. Accordingly, if a single resource is used for storing the units of data, the queue management circuitry may comprise a single locking queue, if multiple resources are used for storing the units of data, the queue management circuitry may comprise multiple locking queues. In other words, the queue management circuitry may comprise a plurality of locking queues associated with a plurality of resources being used to store the units of data. the queue management circuitry may be configured to provide a plurality of locks from the plurality of locking queues to the plurality of worker threads, so that sub-sequences of units of data stored in the plurality of resources are processed concurrently by the plurality of worker threads. Accordingly, as further shown in Fig. 1c, the method may comprise, by the queue management circuitry, providing 134 a plurality of locks from the plurality of locking queues to the plurality of worker threads, so that sub-sequences of units of data stored in the plurality of resources are processed concurrently by the plurality of worker threads. In other words, different locks may be provided to different worker threads at the same time, allowing the worker threads to process the sub-sequences of units of data stored in the respective resources concurrently.

Alternatively, a single lock may be used to control access to multiple resources. The queue management circuitry may thus comprise at least one locking queue that is associated with two or more resources being used to store the units of data. The lock provided by this locking queue may thus yield exclusive access to the two or more resources. The queue management circuitry may be configured to take the lock from the respective locking queue associated with the two or more resources if the sub-sequence of the sequence of units of data is stored in at least one of the two or more resources. Accordingly, as further shown in Fig. 1c, the method may comprise, by the queue management circuitry, taking 133 the lock from the respective locking queue associated with the two or more resources if the sub-sequence of the sequence of units of data is stored in at least one of the two or more resources. In this context, the locking queue or locking queues are data structures being used by the queue management circuitry for storing the respective lock (i.e., the piece of information representing the respective lock) while the respective lock is not held by a worker thread.

Once the worker thread obtains a lock, it may interpret the lock as order for processing the sub-sequence of units of data that is stored in the resource. For example, each worker thread may be configured to obtain, via the queue associated with the worker thread, the lock associated with the resource comprising the sub-sequence of units of data, process the sub-sequence of units of data (e.g., by encrypting or decrypting the units of data, processing sensor data included in the units of data etc.), and return the lock to the queue management circuitry after at least partially processing the sub-sequence of units of data, thereby freeing access to the resource. Accordingly, as further shown in Fig. 1c, the method may comprise obtaining 123, for each worker thread, via the queue associated with the worker thread, the lock associated with the resource comprising the sub-sequence of units of data, processing 124 the sub-sequence of units of data, and returning 125 the lock to the queue management circuitry after at least partially processing the sub-sequence of units of data, thereby freeing access to the resource. The processing of the sub-sequences of units of data is performed by the worker threads and starts with accessing the resource to obtain the sub-sequence of units of data. Accordingly, the worker thread tasked with processing a sub-sequence of units of data may be configured to obtain the sub-sequence of units of data from the resource based on the lock. Once the sub-sequence of units of data is obtained (and other operations that need to be performed on the resource are completed), i.e., once the sub-sequence of units of data is at least partially processed, the lock may be returned to the queue management circuitry. In other words, the lock may be returned to the queue management circuitry after the sub-sequence of units of data is obtained (e.g., read out) from the resource, e.g., before the (actual) processing of the sub-sequence of units of data is completed.

The lock is returned to the queue management circuitry, which obtains the lock from the worker thread after the worker thread has at least partially processed the sub-sequence of units of data stored in the resource. Once the lock to the resource is returned, the next worker thread may be tasked with processing a sub-sequence of units of data that is stored in the resource, thus proceeding with the next sub-sequence after the lock has been obtained. In other words, the queue management proceeds with the next sub-sequence (that is stored in the resource) after the lock (to the resource) has been returned. If multiple locks are used to restrict access to multiple resources, the locks may be provided to worker threads independent from each other, so that a subsequent sub-sequence being stored in a first resource can be processed before the lock controlling access to a second resource is returned.

In general, the units of data may be processed to generate a result of the processing, which may then be used by the computer system, or be provided to another computer system. For example, each worker thread may be configured to provide information on a further resource being used to store the processed sub-sequence of units of data. Accordingly, as further shown in Fig. 1c, the method may comprise providing 127, for each worker thread, information on a further resource being used to store the processed sub-sequence of units of data. This information may accordingly be obtained by the processing circuitry, e.g., by the queue management circuitry. For example, the processing circuitry may be configured to obtain, in addition to the lock, information on a further resource being used to store the processed sub-sequence of units of data. Accordingly, as further shown in Fig. 1c, the method may comprise obtaining 138 in addition to the lock, information on a further resource being used to store the processed sub-sequence of units of data. In some examples, the further processing of the processed subsequences of units of data may be managed by the queue management circuitry as well, so that the information on the further resource being used to store the processed sub-sequence of units of data is stored in another queue being managed by the queue management circuitry, to be processed by the queue management circuitry. In other words, the information on the further resource being used to store the processed sub-sequence of units of data may be provided as entry in an output queue of the queue management circuitry. Consequently, the processing circuitry may be configured to obtain the information on the further resource as entry in an output queue of the queue management circuitry. Accordingly, as further shown in Fig. 1c, the method may comprise obtaining 138 the information on the further resource as entry in an output queue of the queue management circuitry. For example, the processing circuitry may comprise one or more output queues. For example, for each resource being used to store the sub-sequences of units of data (and which may be considered to be "input queues"), a separate output queue may be used by the queue management circuitry. In other words, one queue may be used per initial resource.

In various examples, the processed sub-sequences of units of data are further processed by the processing circuitry, e.g., in order to generate a sequence of processed units of data from the processed sub-sequences of units of data. For example, the processing circuitry may be configured to provide a sequence of processed units of data based on the information on the further resource. Accordingly, as further shown in Fig. 1c, the method may comprise providing 140 a sequence of processed units of data based on the information on the further resource. For example, the sequence of processed units of data may be ordered based on the order of (unprocessed) units of data in the sequence of units of data.

In particular, the processing circuitry may be configured to restore the ordering of the sequence of units of data in the sequence of processed units of data. For example, the processing circuitry may restore the order based on the entries of the output queue, e.g., based on the order of the entries of the output queue. The processing circuitry may be configured to provide the sequence of processed units of data based on the entries of the output queue, e.g., according to the sequence of entries in the output queue. The corresponding method may comprise providing 140 the sequence of processed units of data based on the entries of the output queue.

To help with the reordering when multiple worker threads and/or locks are used in parallel, sequence numbers may be used. The sequence numbers may be (inherently) generated by the queue management circuitry. The sequence numbers may be included with the locks being provided to the worker threads. In other words, each lock provided to the queue associated with a worker thread may be be associated with a sequence number. This sequence number may be returned to the queue management circuitry together with the processed sub-sequence of units of data. For example, the information on the further resource may be provided with information on the sequence number to allow a reordering of units of data that are processed in parallel. For example, the respective worker threads may be configured to include the information on the sequence number with the information on the further resource. The processing circuitry may be configured to obtain the information on the further resource with information on the sequence number, and to provide (e.g., order and provide) the sequence of processed units of data based on the sequence number obtained with the information on the further resource. Accordingly, as further shown in Fig. 1c, the method may comprise obtaining 138 the information on the further resource with information on the sequence number and providing 140 the sequence of processed units of data based on the sequence number obtained with the information on the further resource.

Once the worker threads have completed processing the respective sub-sequences of units of data, they may signal to the queue management circuitry that they are ready to process another sub-sequence of units of data. For example, each worker thread may be configured to provide, after the sub-sequence of units of data has been processed, a completion indicator to the queue management circuitry. Accordingly, as further shown in Fig. 1c, the method may comprise providing 126, for each worker thread, after the sub-sequence of units of data has been processed, the completion indicator to the queue management circuitry. The completion indicators are provided after the (entire) sub-sequence of units of data has been processed

The completion indicator may be used by the processing circuitry, and in particular the queue management circuitry, for at least one of two purposes - to be made aware that the respective worker thread is ready to process a further sub-sequence of units of data, and for ordering the sequence of processed units of data. For example, the processing circuitry may be configured to obtain, in addition to the lock, the completion indicator for each sub-sequence. Accordingly, as further shown in Fig. 1c, the method may comprise obtaining 137, in addition to the lock, the completion indicator for each sub-sequence. The processing circuitry may be configured to provide the sequence of processed units data based on a sequence, in which the completion indicators are received. Accordingly, as further shown in Fig. 1c, the method may comprise providing 140 the sequence of processed units data based on a sequence, in which the completion indicators are received.

In some examples, the completion indicator may correspond to the token being provided by the worker threads to the queue management circuitry - in addition to the token initially provided, tokens may be provided by the worker threads to the queue management circuitry once they are ready to process another sub-sequence of units of data. However, in practice, there may be a delay between a worker thread providing a completion indicator and new work being assigned to the worker thread. To reduce this delay, worker threads may be configured to provide their respective tokens indicating the readiness of the worker threads to process a further sub-sequence of units of data before the entirety of the sub-sequence units of data has been processed, e.g., when a pre-defined number of units of data remains to be processed. For example, heuristics may be used to determine the time the token is to be provided. The queue management circuitry may be configured to determine the readiness of the respective worker threads based on the tokens provided by the worker threads.

In conclusion, when using the queue management circuitry, three pieces of information may be provided (e.g., returned) by the worker threads - the lock itself, which gives sole access to the resource, a token, indicating readiness to take more work, and a completion which us used to retain the original sequence order (typically in the output queue).

In addition to the plurality of worker threads, one or more further worker threads may be used to further process the processed sub-sequences of units of data. For example, the one or more further worker threads may be implemented similar to the plurality of worker threads. For example, the processing circuitry may be configured to execute the one or more further worker threads, with the one or more further worker threads being configured to process the processed sub-sequences of units of data. Again, the queue management circuitry may be used to distribute the work, i.e., the processed sub-sequences of units of data or the sequence of processed units of data to the one or more further worker threads. For example, the queue management circuitry may be configured to provide a further lock to a queue of one of one or more further worker threads. Accordingly, as further shown in Fig. 1c, the method may comprise, by the queue management circuitry, providing 141 the further lock to the queue of one of one or more further worker threads. The further lock may be associated with the output queue comprising the entry with the information on the further resource. For example, by providing the further lock to the queue of the one of the one or more further worker threads, the further worker thread may be instructed to further process the output queue comprising the entry with the information on the further resource, e.g., to further process the processed sub-sequence of units of data stored in the further resource. For example, returning to the example of processing of network packets, the one or more further worker threads may be configured to provide the processed units of data to a transmission (TX) component of the NIC for transmission over the computer network.

There are at least three general approaches for assigning further worker threads to further process the processed units of data - using a single output queue with a single further worker thread, using a single output queue with multiple worker threads, and using multiple output queues with a corresponding number of further worker thread. In the first and third approach, the queue management circuitry may comprise one output queue per further worker thread. In this case, the further lock may be provided to the queue of the further worker thread that is associated with the output queue. For example, in the first case, the further lock may be provided to the single further worker thread being associated with the single output queue, with the further lock being provided to the single further worker thread. In the third case, depending on which output queue contains the processed units of data, the lock may be provided to the associated worker thread. By providing the lock, the further worker thread may be triggered to further process the processed units of data.

In the second case, where the queue management circuitry comprises a single output queue, an approach similar to the one described for the sequence of units of data may be used. For example, if multiple further worker threads are used, the further lock may be provided to the queue of a further worker thread based on the readiness of the respective worker thread. Again, the further worker threads may provide tokens indicating the readiness of the further worker threads to the queue management circuitry, which may select a further worker thread based on the tokens indicating the readiness of the respective worker thread and provide the further lock to the selected further worker thread.

The interface circuitry 12 or means for communicating 12 may correspond to one or more inputs and/or outputs for receiving and/or transmitting information, which may be in digital (bit) values according to a specified code, within a module, between modules or between modules of different entities. For example, the interface circuitry 12 or means for communicating 12 may comprise interface circuitry configured to receive and/or transmit information. In particular, as will become evident in connection with the examples given in connection with Figs. 2 to 8b, the interface circuitry 12 or means for communicating 12 may comprise reception (RX) circuitry for receiving information, such as incoming data packets, and/or transmission (TX) circuitry for transmitting information, such as outgoing data packets.

In embodiments the processing circuitry 14 or means for processing 14 may be implemented using one or more processing units, one or more processing devices, any means for processing, such as a processor, a computer or a programmable hardware component being operable with accordingly adapted software. In other words, the described function of the processing circuitry 14 or means for processing 14 may as well be implemented in software, which is then executed on one or more programmable hardware components. Such hardware components may comprise a general-purpose processor, a Digital Signal Processor (DSP), a micro-controller, etc.

The queue management circuitry 16 or hardware queue manager 16 may be a hardware device, e.g., implemented by (dedicated) circuitry, that is configured to perform queue management. For example, the queue management circuitry or hardware queue manager may be circuitry that is configured to assign a task to be assigned to a worker thread, e.g., by providing a descriptor (denoted QE, Queue Element, in connection with Figs. 2 to 8b) to a queue. In other words, the queue management circuitry 16 or hardware queue manager 16 may be suitable for, e.g., configured to, assign, in hardware, a descriptor to one of two or more queues, i.e., enqueuing the description in one of the queues. In the present concept, the lock being assigned to the queue of a worker thread may be considered such a descriptor.

More details and aspects of the apparatus 10, device 10, method, computer program and computer system 100 are mentioned in connection with the proposed concept or one or more examples described above or below (e.g., Fig. 2 to 8b). The apparatus 10, device 10, method, computer program and computer system 100 may comprise one or more additional optional features corresponding to one or more aspects of the proposed concept, or one or more examples described above or below.

Various examples of the present disclosure relate to a concept for using queue management circuitry, such as the Intel^{®} Dynamic Load balancer (DLB), to distribute locks and sequence numbers

The Intel^{®} Dynamic Load Balancer (previously called Hardware Queue Manager (HQM)) is a component in the Intel^{®} Xeon^{®} platform. Some usage models involve using the device as a load balancer to distribute messages to worker cores. This works well in many scenarios but may have some limitations or drawbacks.

The prosed concept uses the hardware queue management circuitry, such as the DLB, in a different way, as a "lock manager" which can distribute locks along with a sequence number, allowing exclusive access to shared objects (such as Network Interface Controller (NIC) Queues) and also allowing to re-order the processed output using sequence numbers. It may offer better scalability than some other usage models, depending on the workload. The scheme may allow releasing a lock early while retaining a sequence number for parallel processing by other workers, with the sequence number being used to maintain order.

Some usage models involve DLB load balancing one or more logical streams of packets, e.g., streams of packets entering/egressing via a NIC. In these usage models, a DLB QE (a descriptor) is created for each packet and these flow through the DLB as required (see Fig. 2). The logical streams of packets typically enter / egress via NIC descriptor queues (one per logical stream).

Fig. 2 shows a schematic diagram of a flow of the packets through the DLB (denoted QM, "Queue Manager" in Fig. 2). The packets enter via the Receive (RX) portion 210 of the NIC and are assigned (reformatted) descriptors (QEs) by the NIC ring management circuitry of the RX core 220, and are then provided to the QM 230, which distributes single 16 Bytes QEs/packets to worker cores 240. The processed packets are again provided to the QM 250, are provided with new (reformatted) descriptors by the NIC ring management circuitry of the Tx (Transmit) core 260 and are then provided to the Tx portion 270 of the NIC.

As the DLB does not connect directly to the NIC, this usage model involves an Rx bridging thread which runs the NIC poll mode driver, processing NIC descriptors and pushing DLB QEs for the packets into DLB 230, and a similar arrangement on Tx whereby a Tx core pulls QEs from DLB 250 and converts to the NIC packet/descriptor format for Tx.

In this approach, the Rx/Tx cores 220/260 are perceived as overhead since they are not "workers". Furthermore, these cores may represent limits to scalability - if the packet throughput is at the limit of what the Rx/Tx core can handle, adding additional workers will not increase performance. Finally - the performance requirement for the DLB can be high - effectively one load balancing decision/packet, which can lead to requirements in the range of 100M load balancing operations/second.

A usage of sharing NIC RxQs using locks that are load balanced across threads is found in the Open Event Machine Implementation (OpenEM). This software implementation creates locks per RxQ (Receive Queue) and puts them in a ring buffer. Threads dequeue locks from the ring and use the associated RxQ exclusively. Once done, they put back the lock into the same ring buffer. However, this approach does not perform active load balancing similar to the DLB. Threads that are free may dequeue the next lock from the ring and may process the associated RxQ. Moreover, there are no sequence numbers associated with the locks, so no reordering of processed output is possible.

The lock model of the proposed concept provides an entirely different way of using hardware queue managers, such as the DLB. Instead of moving packet descriptors into the DLB, this model allows the worker cores to share access to the NIC queues in a more efficient manner.

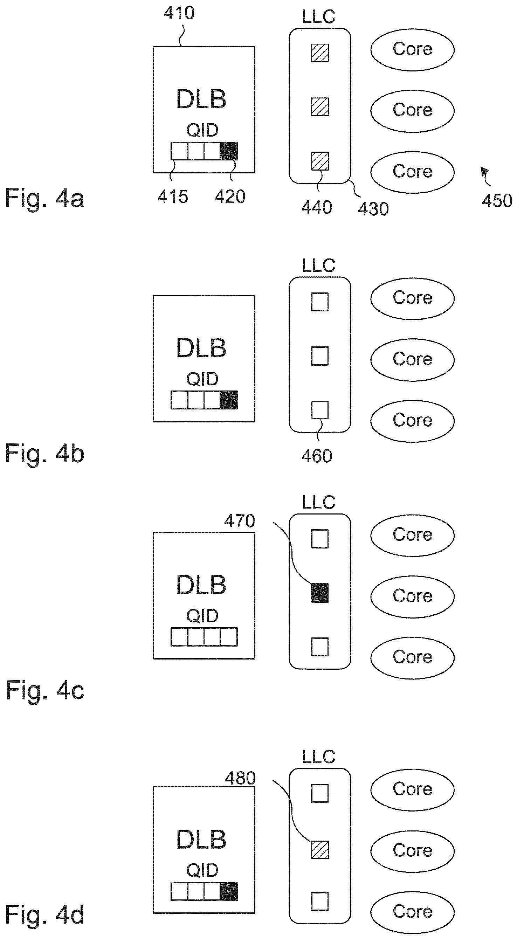

To access the NIC ring safely, a lock may be used. The queue manager (e.g., the queue management circuitry or hardware queue manager 16 introduced in connection with Fig. 1a), e.g., the DLB, is used to distribute these locks to the workers. If a queue manager (e.g., DLB) ordered queue is used to distribute locks, each lock may automatically be assigned a sequence number that is maintained inside the hardware of the queue manager (e.g., the DLB). The proposed concept may be implemented as a batch model - when a worker (i.e., a worker thread) gets a lock on a NIC RxQ (e.g., a resource), the worker thread may claim a batch of descriptors (e.g., units of data) from the queue. The lock may then be released (see Fig. 4) by returning the QE into the queue manager (e.g., DLB), but the sequence number may be retained. The lock may become available for distribution to another worker to access the resource. When a worker processes the batch of packets (e.g., the sub-sequence of units of data), it may enqueue it back to queue manager (e.g., DLB) along with the sequence number. The queue manager (e.g., DLB) now reorders the processed output (e.g., the processed sub-sequence of units of data) in the order in which locks were distributed. This allows safe parallel processing of a NIC RxQ by multiple workers and still able to maintain the packet order.

In this model, no dedicated bridging cores may be required. All cores may be used to process packets (workers) so there may be less perception of overhead. The bottlenecks associated with the bridging cores might not exist. The queue manager (e.g., DLB) performance requirement may be substantially lower - as each LB decision may be associated with a batch of packets. For example, if the average batch size is 10, then there may be a 10 times reduction in required queue manager (e.g., DLB) performance. Moreover, queue manager (e.g., DLB) descriptors might not be created for individual packets - batch descriptors may be created (see below), and the cost may be amortized over multiple packets. The proposed concept may allow direct safe access to RxQs by workers while still maintaining the receive order without software overhead. By nature of the queue manager (e.g., DLB), locks can be prioritized at run time, allowing lowering, or raising priority of one lock over others. However, the proposed approach might not be ideal for every workload.

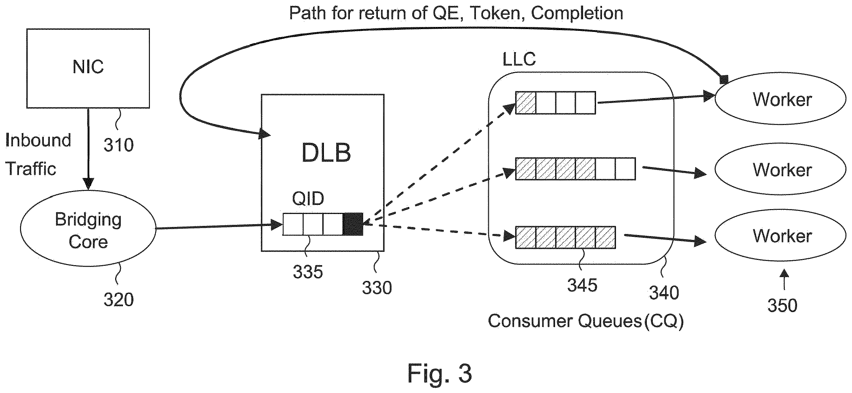

The DLB is often used as a "Queue Manager" as shown in Fig. 3. Fig. 3 shows a schematic diagram of a use of the Dynamic Load Balancer as queue manager according to a producer-consumer scheme.

The bridging core 320 takes traffic (descriptors) from the NIC 310 and converts to queue manager (e.g., DLB) Queue Elements (QEs) that it inserts into an internal Queue (QID) 335 within the queue manager (e.g., DLB) 330. Each QE may correspond to a single packet. It may be a 16B quantity with sufficient data for a single 64b pointer & a few bytes of meta data. Batch schemes may be possible, where each QE refers to multiple packets, but this may require additional indirection. The queue manager (e.g., DLB) 330 is configured to load balance this traffic across multiple "workers" 350 which it does by writing the QEs to the tail of a Consumer Queue 345, which is a simple memory-based ring buffer in the Last Level Cache (LLC) 340. The worker threads 350 iterate through the consumer queues (CQs) 345. For each valid QE read from the CQ, the worker can return following to the queue manager (e.g., DLB). a) The QE itself, which represents the packet - the QE is returned to ensure ordering when a packet is not dropped. This may not be necessary if the packet is dropped, and completion is returned. b) A CQ (Consumer Queue) token, which indicates that this space in the CQ has been consumed. The queue manager (e.g., DLB) might not overwrite that location until the token is returned to queue manager (e.g., DLB). If tokens are not returned, the CQ may fill, and the queue manager (e.g., DLB) may stop writing to it. c) A completion, which is an indication that any critical sections associated with the processing have taken place. If order is required and the QE & completion are returned together (in the same write to queue manager (e.g., DLB)), then the QE may be reinserted to the required QID in the original order.

As well as QIDs (internal queues) whose content can be load balanced, the queue manager (e.g., DLB) may have "direct" QIDs whose content is sent to a single CQ. A typical usage model has the workers returning the QEs to a single direct QID, which allows for recovery of the order lost during load balancing. The single consumer from that direct QID may connect to the NIC to transmit the packets (a Tx bridging core).

The sequence shown in Figs. 4a to 4d explains how the queue manager (e.g., DLB) can be used as a "lock manager" according to the proposed concept. Figs. 4a to 4d show schematic diagrams of a sequence of states of a queue manager being used as lock manager. Figs. 4a to 4d show the queue manager 410 (e.g., the queue management circuitry 10 of Fig. 1a) with the internal queue (QID) 415, which may contain a single QE 420 (which may be used as the lock), the LLC 430 with the consumer queues 440 (associated with the worker threads), and the worker cores 450 (executing the worker threads).

In Fig. 4a, the CQ 440 depths are set to 1 and token counts are initialized to indicate that the respective software running on the worker cores owns the token. This means the CQs look "full". The queue manager (e.g., DLB) QID 415 stores a single QE 420 which acts as the lock. If the QID is of ordered type, then a sequence number gets automatically associated with the locks.

As shown in Fig. 4b, to request a lock, the cores return their CQ token to the queue manager (e.g., DLB). Now each CQ 460 looks empty.

In Fig. 4c, the queue manager can now perform arbitration and choose a "winner" (i.e., to select a worker thread). In this case it writes the QE 470 to the middle core. If there are multiple locks, more than one CQ may be supplied.

A shown in Fig. 4d, when a core completes using the resource associated with the lock, it may release the lock by returning it to the queue manager (e.g., DLB), whereupon it can be reallocated. The core may still retain the sequence number. The core can return its CQ token 480 before or after it returns the QE. It might not be available to receive another lock until it does so. Similarly, the core may return the completion independently of the lock QE. When the core finishes work, it may enqueue the work back to the queue manager (e.g., DLB) with completion, and the queue manager (e.g., DLB) may reorder the completed work using the associated sequence number.

To show a practical usage example, the lockable resources may, for example, be NIC receive queues. Some DPDK (Data Plane Development Kit) usage models dedicate a single core to each RxQ, but the lock model allows multiple cores to share an RxQ in an efficient manner.

A full implementation of this has several components, as shown in the example of Fig. 5. Fig. 5 shows a schematic diagram of an example of the use of a queue manager for processing packets of a network interface controller. Fig. 5 shows cores X, Y, Z 510, NIC rings A-D 520, NIC 525, queue manager 530 and LLC 560. In Fig. 5 the QM 530 comprises (ordered) lock ques 540 with one "lock" QE prepopulated per ring, which assign the lock to cores X, Y, Z via the respective CQs of the cores stored in the LLC 560. For example, one global lock QID or up to one QID per worker may be used (two are used in the example of Fig. 5). The QM 530 may comprise intermediate SEQ rings (i.e., rings that reorder the packets to recover their original order using the associated sequence number) for other stages. The QM 540 comprises TX_QIDs (DIR, i.e., direct queues, which are single consumer queues) 550, e.g., one global Tx_QID or one Tx_QID per NIC ring 520.

For example, the concept may comprise a number of RxQs (4 in the picture below, A-D 520). This means there are 4 locks available for distribution. The concept may comprise a small number of ordered QIDs for load balancing the locks. The reason for using >1 such QID is that they can be prioritized - for example, QID0 might store only the locks for RxQs A & B, QID1 might store the locks for C&D and QID3 might store a lock for the TxQ. Core X might prefer QID0, core Y might prefer QID1, and core Z might prefer the TxQ. They might only get access to other resources when their preferred resources are unavailable. The concept may comprise a number of worker cores (3 in the picture below, X-Z 510). There may be a CQ 550 for each worker that is used to load-balance the locks. Furthermore, an additional queue manager (e.g., DLB) direct QID/CQ combination 550; 555 may be used. For example, a variation of the scheme may have a direct QID per RxQ. These are referred to as TxQIDs 550.

The Lock Qs 540 are configured to load balance their content across the consumers X-Z 510. This is set up to work in ordered mode - this allows the original QID sequence (the order in which the locks are distributed) to be recovered. The Lock Qs are pre-populated with a lock per RxQ (A-D) 520, plus a lock per TxQID 550. Each lock indicates the identity of the resource but can also contain additional metadata (such as the pointer to the head of the queue). The CQ 515 depths for worker cores X-Z are maintained short, in the simplest case, each has a depth of one (as shown as part of the LLC). Initially the CQs are considered to be full. To request work, the workers X-Z may return their token to queue manager (e.g., DLB). The queue manager (e.g., DLB) may then load balance the locks across the workers.

The sequence of actions a worker might perform is as follows. 1) The worker may issue a token to the queue manager (e.g., the queue management circuitry 10 / DLB) to indicate availability for work. 2) The worker may poll its CQ for a valid QE. If the poll is successful, the worker receives the QE (Lock), the sequence number (Comp) & the token. The worker may assume the lock and gain ownership of the NIC Rx ring (e.g., the resource). For example, the QE may include the ring read pointer. 3) The worker may poll NIC ring for a batch of descriptors (e.g., for the sub-sequence of units of data). If the ring is empty, the worker may return the QE/Completion & Token to the queue manager (e.g., DLB). It may then return to 1). 4) The worker may advance the shared ring pointer to claim (partial) batch of descriptors. This pointer can be part of the Lock QE. 5) The worker may optionally perform any critical section that cannot be performed if another core has concurrent access to the RxRing. 6) The worker may release the lock by returning the QE to the queue manager (e.g., DLB) (without completion). The lock may be returned to the QID it came from. 7) The worker may perform any remaining noncritical processing. 8) The worker may return the token when 'nearly finished' - at this point, the worker may advertise for further work. Heuristics may be required to determine the correct point at which to do this. 9) The worker may create a batch QE pointing to the processed batch and enqueue this for reordering to the Tx QID along with the completion. Since the completion is returned at this point, these batch QEs may progress through the TxQID in the same order the locks are issued, which is naturally the RxQ order. If multiple TxQIDs are employed, the TxQID tied to the NIC RxRing may be used.

If at stage 2), the lock gave ownership of a TxQID, the core may simply drain the QID, before returning the lock for redistribution.

In complex processing, multiple "atomic" stages are possible that require critical sections. The scheme can be extended by adding additional stages of direct SEQ QIDs, one per resource, between the RxQ and the TxQIDs. The lock that gives access to the RxQ may implicitly give access to the corresponding SEQ QID and therefore atomic operations may be carried out across multiple stages of the pipeline. Anti-replay window update in IPsec (Internet Protocol security) processing is one such example.

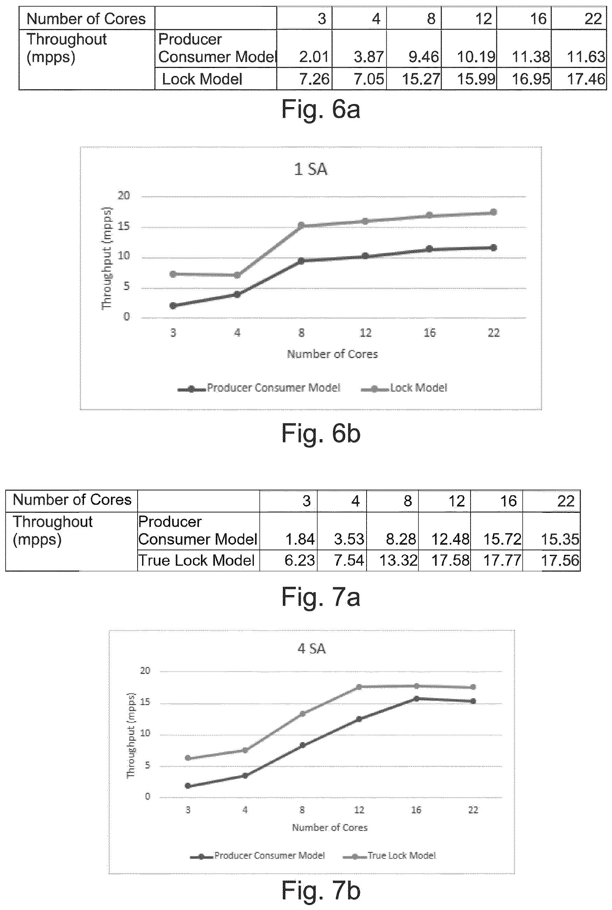

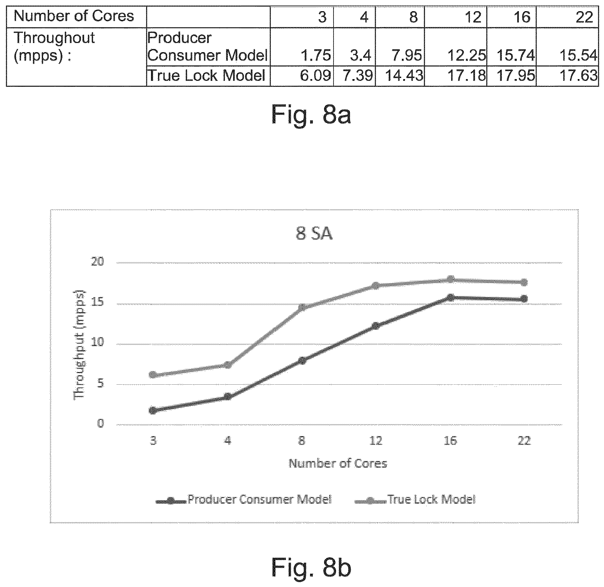

In the following, some experimental performance results from using the queue manager (e.g., DLB) with bridging cores (Producer/Consumer Model) vs queue manager (e.g., DLB) as a lock manager (the proposed lock model) for an IPsec encryption application (for outbound packets). 64-byte packets belonging to different SAs (Security Association, each SA is carrying a different IP subnet) are received from packet generator on 4 NIC RSS (Receive Side Scaling) queues. These are processed by the cores and transmitted on to a single TX queue. As each SA carries an entire IP subnet, traffic from each SA is expected to distribute evenly across all 4 RxQs. The benchmarks show the proposed lock model (second row of the tables of Fig. 6a, 7a, 8a) consistently outperforming the Producer/Consumer model (second row of the tables of Fig. 6a, 7a, 8a). This is especially true at lower core count where throughput is limited by number of workers and hence available cycles of Producer and Consumer cores are wasted. Also, at the high end, Producer/Consumer model saturates at max Producer core capacity whereas Lock model can scale. Figs. 6a and 6b show benchmark results of a benchmark with one security association, Figs. 7a and 7b show benchmark results of a benchmark with four security associations, and Figs. 8a and 8b show benchmark results of a benchmark with eight security associations.

More details and aspects of the use of the queue manager as lock manager are mentioned in connection with the proposed concept or one or more examples described above or below (e.g., Fig. 1a to 1c). The queue manager and associated circuitry may comprise one or more additional optional features corresponding to one or more aspects of the proposed concept, or one or more examples described above or below.

In the following, some examples of the proposed concept are introduced:
An example (e.g., example 1) relates to an apparatus (10) comprising processing circuitry (14; 16) configured to obtain a sequence of units of data. The processing circuitry is configured to obtain tokens indicating a readiness of a plurality of worker threads being executed on the processing circuitry. The processing circuitry is configured to process sub-sequences of the sequence of units of data by selecting, by a queue management circuitry (16) of the processing circuitry (14), a worker thread from the plurality of worker threads based on the obtained tokens indicating the readiness, providing, by the queue management circuitry, a lock to a queue associated with the worker thread, the lock being associated with a resource comprising a sub-sequence of the sequence of units of data, obtaining, by the queue management circuitry, the lock from the worker thread after the worker thread has at least partially processed the sub-sequence of units of data stored in the resource, and proceeding with the next sub-sequence after the lock has been obtained.

Another example (e.g., example 2) relates to a previously described example (e.g., example 1) or to any of the examples described herein, further comprising that the lock acts as a lock with respect to access to the resource.

Another example (e.g., example 3) relates to a previously described example (e.g., example 2) or to any of the examples described herein, further comprising that the queue management circuitry is configured to assign a lock for accessing the resource to the worker thread by providing the lock to the queue associated with the worker thread.

Another example (e.g., example 4) relates to a previously described example (e.g., example 3) or to any of the examples described herein, further comprising that the queue management circuitry comprises one locking queue per resource being used to store the units of data, wherein the queue management circuitry is configured to take the lock from the locking queue associated with the resource comprising the sub-sequence of units of data.

Another example (e.g., example 5) relates to a previously described example (e.g., example 4) or to any of the examples described herein, further comprising that the queue management circuitry comprises a plurality of locking queues associated with a plurality of resources being used to store the units of data, wherein the queue management circuitry is configured to provide a plurality of locks from the plurality of locking queues to the plurality of worker threads, so that sub-sequences of units of data stored in the plurality of resources are processed concurrently by the plurality of worker threads.

Another example (e.g., example 6) relates to a previously described example (e.g., example 3) or to any of the examples described herein, further comprising that the queue management circuitry comprises at least one locking queue that is associated with two or more resources being used to store the units of data, wherein the queue management circuitry is configured to take the lock from the respective locking queue associated with the two or more resources if the sub-sequence of the sequence of units of data is stored in at least one of the two or more resources.

Another example (e.g., example 7) relates to a previously described example (e.g., one of the examples 1 to 6) or to any of the examples described herein, further comprising that each resource is a ring buffer.

Another example (e.g., example 8) relates to a previously described example (e.g., one of the examples 1 to 7) or to any of the examples described herein, further comprising that the processing circuitry is configured to obtain, in addition to the lock, information on a further resource being used to store the processed sub-sequence of units of data, wherein the processing circuitry is configured to provide a sequence of processed units of data based on the information on the further resource.

Another example (e.g., example 9) relates to a previously described example (e.g., example 8) or to any of the examples described herein, further comprising that each lock provided to the queue associated with a worker thread is associated with a sequence number, wherein the processing circuitry is configured to obtain the information on the further resource with information on the sequence number, wherein the processing circuitry is configured to provide the sequence of processed units of data based on the sequence number obtained with the information on the further resource.

Another example (e.g., example 10) relates to a previously described example (e.g., example 9) or to any of the examples described herein, further comprising that the processing circuitry is configured to obtain, in addition to the lock, a completion indicator for each sub-sequence, and to provide the sequence of processed units data based on a sequence, in which the completion indicators are received.

Another example (e.g., example 11) relates to a previously described example (e.g., one of the examples 9 to 10) or to any of the examples described herein, further comprising that the processing circuitry is configured to obtain the information on the further resource as entry in an output queue of the queue management circuitry, wherein the processing circuitry is configured to provide the sequence of processed units of data based on the entries of the output queue.

Another example (e.g., example 12) relates to a previously described example (e.g., example 11) or to any of the examples described herein, further comprising that the queue management circuitry is configured to provide a further lock to a queue of one of one or more further worker threads, the further lock being associated with the output queue comprising the entry with the information on the further resource.

Another example (e.g., example 13) relates to a previously described example (e.g., example 12) or to any of the examples described herein, further comprising that the queue management circuitry comprises one output queue per further worker thread, wherein the further lock is provided to the queue of the further worker thread that is associated with the output queue.

Another example (e.g., example 14) relates to a previously described example (e.g., example 12) or to any of the examples described herein, further comprising that the queue management circuitry comprises a single output queue, wherein the further lock is provided to the queue of a further worker thread based on the readiness of the respective worker thread.

Another example (e.g., example 15) relates to a previously described example (e.g., one of the examples 1 to 14) or to any of the examples described herein, further comprising that the sequence of units of data is a sequence of data packets received by a network interface controller circuitry.

Another example (e.g., example 16) relates to a previously described example (e.g., one of the examples 1 to 15) or to any of the examples described herein, further comprising that the processing circuitry is configured to execute the plurality of worker threads and/or one or more further worker threads.

Another example (e.g., example 17) relates to a previously described example (e.g., example 16) or to any of the examples described herein, further comprising that each worker thread is configured to obtain, via the queue associated with the worker thread, the lock associated with the resource comprising the sub-sequence of units of data, process the sub-sequence of units of data, and return the lock to the queue management circuitry after at least partially processing the sub-sequence of units of data, thereby freeing access to the resource.

Another example (e.g., example 18) relates to a previously described example (e.g., example 17) or to any of the examples described herein, further comprising that each worker thread is configured to provide, after the sub-sequence of units of data has been processed, a completion indicator to the queue management circuitry.

Another example (e.g., example 19) relates to a previously described example (e.g., one of the examples 16 to 18) or to any of the examples described herein, further comprising that each worker thread is configured to initially provide a token indicating the readiness of the worker thread to the queue management circuitry.

Another example (e.g., example 20) relates to a previously described example (e.g., one of the examples 16 to 19) or to any of the examples described herein, further comprising that each worker thread is configured to provide information on a further resource being used to store the processed sub-sequence of units of data.

Another example (e.g., example 21) relates to a previously described example (e.g., example 20) or to any of the examples described herein, further comprising that the information on the further resource being used to store the processed sub-sequence of units of data is provided as entry in an output queue of the queue management circuitry.

Another example (e.g., example 22) relates to a previously described example (e.g., one of the examples 20 to 21) or to any of the examples described herein, further comprising that each lock provided to the queue associated with a worker thread is associated with a sequence number, wherein the information on the further resource is provided with information on the sequence number to allow a reordering of units of data that are processed in parallel.

Another example (e.g., example 23) relates to a previously described example (e.g., one of the examples 1 to 22) or to any of the examples described herein, further comprising that each sub-sequence of units of data comprises at least two units of data.

Another example (e.g., example 24) relates to a previously described example (e.g., one of the examples 1 to 23) or to any of the examples described herein, further comprising that a depth of the queue associated with a worker thread or further worker thread is limited to one, so that a worker thread is limited to holding a single lock.

An example (e.g., example 25) relates to a device (10) comprising means for processing (14; 16) configured to obtain a sequence of units of data. The means for processing is configured to obtain tokens indicating a readiness of a plurality of worker threads being executed on the means for processing. The means for processing is configured to process sub-sequences of the sequence of units of data by selecting, by a hardware queue manager (16) of the means for processing (14), a worker thread from the plurality of worker threads based on the obtained tokens indicating the readiness, providing, by the hardware queue manager, a lock to a queue associated with the worker thread, the lock being associated with a resource comprising a sub-sequence of the sequence of units of data, obtaining, by the hardware queue manager, the lock from the worker thread after the worker thread has at least partially processed the sub-sequence of units of data stored in the resource, and proceeding with the next sub-sequence after the lock has been obtained.

Another example (e.g., example 26) relates to a previously described example (e.g., example 25) or to any of the examples described herein, further comprising that the lock acts as a lock with respect to access to the resource.

Another example (e.g., example 27) relates to a previously described example (e.g., example 26) or to any of the examples described herein, further comprising that the hardware queue manager is configured to assign a lock for accessing the resource to the worker thread by providing the lock to the queue associated with the worker thread.

Another example (e.g., example 28) relates to a previously described example (e.g., example 27) or to any of the examples described herein, further comprising that the hardware queue manager comprises one locking queue per resource being used to store the units of data, wherein the hardware queue manager is configured to take the lock from the locking queue associated with the resource comprising the sub-sequence of units of data.

Another example (e.g., example 29) relates to a previously described example (e.g., example 28) or to any of the examples described herein, further comprising that the hardware queue manager comprises a plurality of locking queues associated with a plurality of resources being used to store the units of data, wherein the hardware queue manager is configured to provide a plurality of locks from the plurality of locking queues to the plurality of worker threads, so that sub-sequences of units of data stored in the plurality of resources are processed concurrently by the plurality of worker threads.

Another example (e.g., example 30) relates to a previously described example (e.g., example 27) or to any of the examples described herein, further comprising that the hardware queue manager comprises at least one locking queue that is associated with two or more resources being used to store the units of data, wherein the hardware queue manager is configured to take the lock from the respective locking queue associated with the two or more resources if the sub-sequence of the sequence of units of data is stored in at least one of the two or more resources.

Another example (e.g., example 31) relates to a previously described example (e.g., one of the examples 25 to 30) or to any of the examples described herein, further comprising that each resource is a ring buffer.

Another example (e.g., example 32) relates to a previously described example (e.g., one of the examples 25 to 31) or to any of the examples described herein, further comprising that the means for processing is configured to obtain, in addition to the lock, information on a further resource being used to store the processed sub-sequence of units of data, wherein the means for processing is configured to provide a sequence of processed units of data based on the information on the further resource.

Another example (e.g., example 33) relates to a previously described example (e.g., example 32) or to any of the examples described herein, further comprising that each lock provided to the queue associated with a worker thread is associated with a sequence number, wherein the means for processing is configured to obtain the information on the further resource with information on the sequence number, wherein the means for processing is configured to provide the sequence of processed units of data based on the sequence number obtained with the information on the further resource.

Another example (e.g., example 34) relates to a previously described example (e.g., example 33) or to any of the examples described herein, further comprising that the means for processing is configured to obtain, in addition to the lock, a completion indicator for each sub-sequence, and to provide the sequence of processed units data based on a sequence, in which the completion indicators are received.

Another example (e.g., example 35) relates to a previously described example (e.g., one of the examples 33 to 34) or to any of the examples described herein, further comprising that the means for processing is configured to obtain the information on the further resource as entry in an output queue of the hardware queue manager, wherein the means for processing is configured to provide the sequence of processed units of data based on the entries of the output queue.

Another example (e.g., example 36) relates to a previously described example (e.g., example 35) or to any of the examples described herein, further comprising that the hardware queue manager is configured to provide a further lock to a queue of one of one or more further worker threads, the further lock being associated with the output queue comprising the entry with the information on the further resource.

Another example (e.g., example 37) relates to a previously described example (e.g., example 36) or to any of the examples described herein, further comprising that the hardware queue manager comprises one output queue per further worker thread, wherein the further lock is provided to the queue of the further worker thread that is associated with the output queue.

Another example (e.g., example 38) relates to a previously described example (e.g., example 36) or to any of the examples described herein, further comprising that the hardware queue manager comprises a single output queue, wherein the further lock is provided to the queue of a further worker thread based on the readiness of the respective worker thread.

Another example (e.g., example 39) relates to a previously described example (e.g., one of the examples 25 to 38) or to any of the examples described herein, further comprising that the sequence of units of data is a sequence of data packets received by a network interface controller circuitry.

Another example (e.g., example 40) relates to a previously described example (e.g., one of the examples 25 to 39) or to any of the examples described herein, further comprising that the means for processing is configured to execute the plurality of worker threads and/or one or more further worker threads.

Another example (e.g., example 41) relates to a previously described example (e.g., example 40) or to any of the examples described herein, further comprising that each worker thread is configured to obtain, via the queue associated with the worker thread, the lock associated with the resource comprising the sub-sequence of units of data, process the sub-sequence of units of data, and return the lock to the hardware queue manager after at least partially processing the sub-sequence of units of data, thereby freeing access to the resource.

Another example (e.g., example 42) relates to a previously described example (e.g., example 41) or to any of the examples described herein, further comprising that each worker thread is configured to provide, after the sub-sequence of units of data has been processed, a completion indicator to the hardware queue manager.

Another example (e.g., example 43) relates to a previously described example (e.g., one of the examples 40 to 42) or to any of the examples described herein, further comprising that each worker thread is configured to initially provide a token indicating the readiness of the worker thread to the hardware queue manager.

Another example (e.g., example 44) relates to a previously described example (e.g., one of the examples 40 to 43) or to any of the examples described herein, further comprising that each worker thread is configured to provide information on a further resource being used to store the processed sub-sequence of units of data.

Another example (e.g., example 45) relates to a previously described example (e.g., example 44) or to any of the examples described herein, further comprising that the information on the further resource being used to store the processed sub-sequence of units of data is provided as entry in an output queue of the hardware queue manager.

Another example (e.g., example 46) relates to a previously described example (e.g., one of the examples 44 to 45) or to any of the examples described herein, further comprising that each lock provided to the queue associated with a worker thread is associated with a sequence number, wherein the information on the further resource is provided with information on the sequence number to allow a reordering of units of data that are processed in parallel.

Another example (e.g., example 47) relates to a previously described example (e.g., one of the examples 25 to 46) or to any of the examples described herein, further comprising that each sub-sequence of units of data comprises at least two units of data.

Another example (e.g., example 48) relates to a previously described example (e.g., one of the examples 25 to 47) or to any of the examples described herein, further comprising that a depth of the queue associated with a worker thread or further worker thread is limited to one, so that a worker thread is limited to holding a single lock.

An example (e.g., example 49) relates to a computer system (100) comprising the apparatus (10) according to one of the examples 1 to 24 or according to any other example.

An example (e.g., example 50) relates to a computer system (100) comprising the device (10) according to one of the examples 25 to 48 or according to any other example.

An example (e.g., example 51) relates to a method for processing a sequence of units of data, the method comprising obtaining (110) the sequence of units of data. The method comprises obtaining (131) tokens indicating a readiness of a plurality of worker threads being executed on the processing circuitry. The method comprises processing (130) sub-sequences of the sequence of units of data by selecting (132), by a queue management circuitry, a worker thread from the plurality of worker threads based on the obtained tokens indicating the readiness, providing (134), by the queue management circuitry, a lock to a queue associated with the worker thread, the lock being associated with a resource comprising a sub-sequence of the sequence of units of data, obtaining (136), by the queue management circuitry, the lock from the worker thread after the worker thread has at least partially processed the sub-sequence of units of data stored in the resource, and proceeding with the next sub-sequence after the lock has been obtained.

Another example (e.g., example 52) relates to a previously described example (e.g., example 51) or to any of the examples described herein, further comprising that the lock acts as a lock with respect to access to the resource.

Another example (e.g., example 53) relates to a previously described example (e.g., example 52) or to any of the examples described herein, further comprising that the method comprises assigning (135) a lock for accessing the resource to the worker thread by providing (134) the lock to the queue associated with the worker thread.

Another example (e.g., example 54) relates to a previously described example (e.g., example 53) or to any of the examples described herein, further comprising that the queue management circuitry comprises one locking queue per resource being used to store the units of data, wherein the method comprises, by the queue management circuitry, taking (133) the lock from the locking queue associated with the resource comprising the sub-sequence of units of data.

Another example (e.g., example 55) relates to a previously described example (e.g., example 54) or to any of the examples described herein, further comprising that the queue management circuitry comprises a plurality of locking queues associated with a plurality of resources being used to store the units of data, wherein the method comprises, by the queue management circuitry, providing (134) a plurality of locks from the plurality of locking queues to the plurality of worker threads, so that sub-sequences of units of data stored in the plurality of resources are processed concurrently by the plurality of worker threads.

Another example (e.g., example 56) relates to a previously described example (e.g., example 53) or to any of the examples described herein, further comprising that the queue management circuitry comprises at least one locking queue that is associated with two or more resources being used to store the units of data, wherein the method comprises, by the queue management circuitry, taking (133) the lock from the respective locking queue associated with the two or more resources if the sub-sequence of the sequence of units of data is stored in at least one of the two or more resources.

Another example (e.g., example 57) relates to a previously described example (e.g., one of the examples 51 to 56) or to any of the examples described herein, further comprising that each resource is a ring buffer.

Another example (e.g., example 58) relates to a previously described example (e.g., one of the examples 51 to 57) or to any of the examples described herein, further comprising that the method comprises obtaining (138) in addition to the lock, information on a further resource being used to store the processed sub-sequence of units of data, wherein the method comprises providing (140) a sequence of processed units of data based on the information on the further resource.

Another example (e.g., example 59) relates to a previously described example (e.g., example 58) or to any of the examples described herein, further comprising that each lock provided to the queue associated with a worker thread is associated with a sequence number, wherein the method comprises obtaining (138) the information on the further resource with information on the sequence number and providing (140) the sequence of processed units of data based on the sequence number obtained with the information on the further resource.

Another example (e.g., example 60) relates to a previously described example (e.g., example 59) or to any of the examples described herein, further comprising that the method comprises obtaining (137), in addition to the lock, a completion indicator for each sub-sequence, and providing (140) the sequence of processed units data based on a sequence, in which the completion indicators are received.

Another example (e.g., example 61) relates to a previously described example (e.g., one of the examples 59 to 60) or to any of the examples described herein, further comprising that the method comprises obtaining (138) the information on the further resource as entry in an output queue of the queue management circuitry and providing (140) the sequence of processed units of data based on the entries of the output queue.

Another example (e.g., example 62) relates to a previously described example (e.g., example 61) or to any of the examples described herein, further comprising that the method comprises, by the queue management circuitry, providing (141) a further lock to a queue of one of one or more further worker threads, the further lock being associated with the output queue comprising the entry with the information on the further resource.

Another example (e.g., example 63) relates to a previously described example (e.g., example 62) or to any of the examples described herein, further comprising that the queue management circuitry comprises one output queue per further worker thread, wherein the further lock is provided to the queue of the further worker thread that is associated with the output queue.

Another example (e.g., example 64) relates to a previously described example (e.g., example 62) or to any of the examples described herein, further comprising that the queue management circuitry comprises a single output queue, wherein the further lock is provided to the queue of a further worker thread based on the readiness of the respective worker thread.

Another example (e.g., example 65) relates to a previously described example (e.g., one of the examples 51 to 64) or to any of the examples described herein, further comprising that the sequence of units of data is a sequence of data packets received by a network interface controller circuitry.

Another example (e.g., example 66) relates to a previously described example (e.g., one of the examples 51 to 65) or to any of the examples described herein, further comprising that the method comprises executing (120) the plurality of worker threads and/or one or more further worker threads.

Another example (e.g., example 67) relates to a previously described example (e.g., example 66) or to any of the examples described herein, further comprising that the method comprises obtaining (123), for each worker thread, via the queue associated with the worker thread, the lock associated with the resource comprising the sub-sequence of units of data, processing (124) the sub-sequence of units of data and returning (125) the lock to the queue management circuitry after at least partially processing the sub-sequence of units of data, thereby freeing access to the resource.

Another example (e.g., example 68) relates to a previously described example (e.g., example 67) or to any of the examples described herein, further comprising that the method comprises providing (126), for each worker thread, after the sub-sequence of units of data has been processed, a completion indicator to the queue management circuitry.

Another example (e.g., example 69) relates to a previously described example (e.g., one of the examples 66 to 68) or to any of the examples described herein, further comprising that the method comprises initially providing (121), for each worker thread, a token indicating the readiness of the worker thread to the queue management circuitry.

Another example (e.g., example 70) relates to a previously described example (e.g., one of the examples 66 to 69) or to any of the examples described herein, further comprising that the method comprises providing (127), for each worker thread, information on a further resource being used to store the processed sub-sequence of units of data.

Another example (e.g., example 71) relates to a previously described example (e.g., example 70) or to any of the examples described herein, further comprising that the information on the further resource being used to store the processed sub-sequence of units of data is provided as entry in an output queue of the queue management circuitry.

Another example (e.g., example 72) relates to a previously described example (e.g., one of the examples 70 to 71) or to any of the examples described herein, further comprising that each lock provided to the queue associated with a worker thread is associated with a sequence number, wherein the information on the further resource is provided with information on the sequence number to allow a reordering of units of data that are processed in parallel.

Another example (e.g., example 73) relates to a previously described example (e.g., one of the examples 71 to 72) or to any of the examples described herein, further comprising that each sub-sequence of units of data comprises at least two units of data.

Another example (e.g., example 74) relates to a previously described example (e.g., one of the examples 71 to 73) or to any of the examples described herein, further comprising that a depth of the queue associated with a worker thread or further worker thread is limited to one, so that a worker thread is limited to holding a single lock.

An example (e.g., example 75) relates to a machine-readable storage medium including program code, when executed, to cause a machine to perform the method of one of the examples 51 to 74 or according to any other example.

An example (e.g., example 76) relates to a computer program having a program code for performing the method of one of the examples 51 to 74 or according to any other example when the computer program is executed on a computer, a processor, or a programmable hardware component.

An example (e.g., example 77) relates to a machine-readable storage including machine readable instructions, when executed, to implement a method or realize an apparatus as claimed in any pending claim or shown in any example.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor, or other programmable hardware component. Thus, steps, operations, or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations, or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process, or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

As used herein, the term "module" refers to logic that may be implemented in a hardware component or device, software or firmware running on a processing unit, or a combination thereof, to perform one or more operations consistent with the present disclosure. Software and firmware may be embodied as instructions and/or data stored on non-transitory computer-readable storage media. As used herein, the term "circuitry" can comprise, singly or in any combination, non-programmable (hardwired) circuitry, programmable circuitry such as processing units, state machine circuitry, and/or firmware that stores instructions executable by programmable circuitry. Modules described herein may, collectively or individually, be embodied as circuitry that forms a part of a computing system. Thus, any of the modules can be implemented as circuitry. A computing system referred to as being programmed to perform a method can be programmed to perform the method via software, hardware, firmware, or combinations thereof.

Any of the disclosed methods (or a portion thereof) can be implemented as computer-executable instructions or a computer program product. Such instructions can cause a computing system or one or more processing units capable of executing computer-executable instructions to perform any of the disclosed methods. As used herein, the term "computer" refers to any computing system or device described or mentioned herein. Thus, the term "computer-executable instruction" refers to instructions that can be executed by any computing system or device described or mentioned herein.

The computer-executable instructions can be part of, for example, an operating system of the computing system, an application stored locally to the computing system, or a remote application accessible to the computing system (e.g., via a web browser). Any of the methods described herein can be performed by computer-executable instructions performed by a single computing system or by one or more networked computing systems operating in a network environment. Computer-executable instructions and updates to the computer-executable instructions can be downloaded to a computing system from a remote server.

Further, it is to be understood that implementation of the disclosed technologies is not limited to any specific computer language or program. For instance, the disclosed technologies can be implemented by software written in C++, C#, Java, Perl, Python, JavaScript, Adobe Flash, C#, assembly language, or any other programming language. Likewise, the disclosed technologies are not limited to any particular computer system or type of hardware.

Furthermore, any of the software-based examples (comprising, for example, computer-executable instructions for causing a computer to perform any of the disclosed methods) can be uploaded, downloaded, or remotely accessed through a suitable communication means. Such suitable communication means include, for example, the Internet, the World Wide Web, an intranet, cable (including fiber optic cable), magnetic communications, electromagnetic communications (including RF, microwave, ultrasonic, and infrared communications), electronic communications, or other such communication means.

The disclosed methods, apparatuses, and systems are not to be construed as limiting in any way. Instead, the present disclosure is directed toward all novel and nonobvious features and aspects of the various disclosed examples, alone and in various combinations and subcombinations with one another. The disclosed methods, apparatuses, and systems are not limited to any specific aspect or feature or combination thereof, nor do the disclosed examples require that any one or more specific advantages be present, or problems be solved.

Theories of operation, scientific principles, or other theoretical descriptions presented herein in reference to the apparatuses or methods of this disclosure have been provided for the purposes of better understanding and are not intended to be limiting in scope. The apparatuses and methods in the appended claims are not limited to those apparatuses and methods that function in the manner described by such theories of operation.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. An apparatus (10) comprising processing circuitry (14; 16) configured to:
obtain a sequence of units of data;
obtain tokens indicating a readiness of a plurality of worker threads being executed on the processing circuitry; and
process sub-sequences of the sequence of units of data by:
selecting, by a queue management circuitry (16) of the processing circuitry, a worker thread from the plurality of worker threads based on the obtained tokens indicating the readiness,
providing, by the queue management circuitry, a lock to a queue associated with the worker thread, the lock being associated with a resource comprising a sub-sequence of the sequence of units of data,
obtaining, by the queue management circuitry, the lock from the worker thread after the worker thread has at least partially processed the sub-sequence of units of data stored in the resource, and
proceeding with the next sub-sequence after the lock has been obtained.

2. The apparatus according to claim 1, wherein the lock acts as a lock with respect to access to the resource.

3. The apparatus according to claim 2, wherein the queue management circuitry is configured to assign a lock for accessing the resource to the worker thread by providing the lock to the queue associated with the worker thread.

4. The apparatus according to claim 3, wherein the queue management circuitry comprises one locking queue per resource being used to store the units of data, wherein the queue management circuitry is configured to take the lock from the locking queue associated with the resource comprising the sub-sequence of units of data.

5. The apparatus according to claim 4, wherein the queue management circuitry comprises a plurality of locking queues associated with a plurality of resources being used to store the units of data, wherein the queue management circuitry is configured to provide a plurality of locks from the plurality of locking queues to the plurality of worker threads, so that sub-sequences of units of data stored in the plurality of resources are processed concurrently by the plurality of worker threads.

6. The apparatus according to claim 3, wherein the queue management circuitry comprises at least one locking queue that is associated with two or more resources being used to store the units of data, wherein the queue management circuitry is configured to take the lock from the respective locking queue associated with the two or more resources if the sub-sequence of the sequence of units of data is stored in at least one of the two or more resources.

7. The apparatus according to one of the claims 1 to 6, wherein each resource is a ring buffer.

8. The apparatus according to one of the claims 1 to 7, wherein the processing circuitry is configured to obtain, in addition to the lock, information on a further resource being used to store the processed sub-sequence of units of data, wherein the processing circuitry is configured to provide a sequence of processed units of data based on the information on the further resource.

9. The apparatus according to claim 8, wherein each lock provided to the queue associated with a worker thread is associated with a sequence number, wherein the processing circuitry is configured to obtain the information on the further resource with information on the sequence number, wherein the processing circuitry is configured to provide the sequence of processed units of data based on the sequence number obtained with the information on the further resource.

10. The apparatus according to claim 9, wherein the processing circuitry is configured to obtain, in addition to the lock, a completion indicator for each sub-sequence, and to provide the sequence of processed units data based on a sequence, in which the completion indicators are received.

11. The apparatus according to one of the claims 9 or 10, wherein the processing circuitry is configured to obtain the information on the further resource as entry in an output queue of the queue management circuitry, wherein the processing circuitry is configured to provide the sequence of processed units of data based on the entries of the output queue.

12. The apparatus according to claim 11, wherein the queue management circuitry is configured to provide a further lock to a queue of one of one or more further worker threads, the further lock being associated with the output queue comprising the entry with the information on the further resource.

13. The apparatus according to one of the claims 1 to 12, wherein a depth of the queue associated with a worker thread or further worker thread is limited to one, so that a worker thread is limited to holding a single lock.

14. A method for processing a sequence of units of data, the method comprising:
obtaining (110) the sequence of units of data;
obtaining (131) tokens indicating a readiness of a plurality of worker threads being executed on the processing circuitry; and
processing (130) sub-sequences of the sequence of units of data by:
selecting (132), by a queue management circuitry, a worker thread from the plurality of worker threads based on the obtained tokens indicating the readiness,
providing (134), by the queue management circuitry, a lock to a queue associated with the worker thread, the lock being associated with a resource comprising a sub-sequence of the sequence of units of data,
obtaining (136), by the queue management circuitry, the lock from the worker thread after the worker thread has at least partially processed the sub-sequence of units of data stored in the resource, and
proceeding with the next sub-sequence after the lock has been obtained.

15. A computer program having a program code for performing the method of claim 14.
